# EUROPÄISCHE PATENTSCHRIFT

(11) **EP 1 356 982 B1**
(45) Veröffentlichungstag und Bekanntmachung des Hinweises auf die Patenterteilung: **29.06.2011**
(21) Anmeldenummer: 03450092.6
(22) Anmeldetag: 16.04.2003
(51) Int. Cl.: B60M 1/28

(54) **Maschine zum Verlegen einer Fahrleitung**
Machine for installation of a catenary wire
Machine pour l'installation d'une ligne caténaire

(30) Priorität: 24.04.2002 AT 2692002 U
(43) Veröffentlichungstag der Anmeldung: 29.10.2003
(73) Patentinhaber: Franz Plasser Bahnbaumaschinen-Industriegesellschaft m.b.H., 1010 Wien (AT)
(72) Erfinder: Theurer, Josef, 1010 Wien (AT); Gruber, Leopold, 3270 Scheibbs (AT)

(56) Entgegenhaltungen:
- EP-A- 0 459 537
- DE-C1- 4 334 063

## Beschreibung

Die Erfindung betrifft eine Maschine zum Verlegen eines aus einem Fahrdraht oder einem Tragseil einer Fahrleitung eines Gleises gebildeten Fahrleitungsseiles, mit einem auf Schienenfahrwerken verfahrbaren Maschinenrahmen, einer Speichertrommel, einer höhenverstellbaren Umlenkrolle und einer zwischen dieser und der Speichertrommel angeordneten Friktionswinde, mit der beim Abziehen des Fahrleitungsseiles von der Speichertrommel unter Erzeugung einer Verlegespannung ein - einer auf das Fahrleitungsseil einwirkenden Abzugskraft entgegenwirkender - Abzugswiderstand gebildet wird, sowie mit einem Kraftsensor zum Messen der Verlegespannung.

Eine derartige Maschine ist bereits durch EP 0 416 136 B1 bekannt, wobei der Kraftsensor zur Prüfung der Verlegespannung zwischen Friktionswinde und Umlenkrolle positioniert ist. Dies erfordert allerdings in nachteiliger Weise einen erhöhten Manipulationsaufwand nach jedem Wechsel einer Speichertrommel, außerdem ist der Kraftsensor bei einem Wechsel von Fahrdraht zu Tragseil bzw. bei Verwendung unterschiedlicher Drahtquerschnitte immer wieder neu einzustellen.

Die Aufgabe der vorliegenden Erfindung liegt nun in der Schaffung einer Maschine der gattungsgemäßen Art, mit der unter Vermeidung von Umrüst- oder Einstellarbeiten jederzeit eine exakte Erfassung der Verlegespannung möglich ist.

Erfindungsgemäß wird diese Aufgabe mit einer Maschine der eingangs genannten Art dadurch gelöst, daß der Kraftsensor zwischen einem die Friktionswinde tragenden Windenrahmen und einem mit diesem verbundenen Hilfsrahmen angeordnet ist.

Mit dieser Lösung ist der Kraftsensor konstruktiv in vorteilhafter Weise derartig in das Abwickelsystem integriert, daß jedweder manipulative Aufwand zur Gänze wegfällt und damit das Meßergebnis auch nicht von der Zuverlässigkeit der Bedienungsperson abhängig ist. Durch die Eingliederung in die Lagerung der Friktionswinde ist auch jede Möglichkeit einer Beschädigung des Kraftsensors insbesondere als Folge der problematischen Manipulationen des Fahrleitungsseiles am Beginn bzw. am Ende einer abzuwickelnden Speichertrommel zuverlässig ausgeschlossen.

Weitere Vorteile und Ausbildungen der Erfindung ergeben sich aus den Unteransprüchen und der Zeichnung.

Im folgenden wird die Erfindung anhand von in der Zeichnung dargestellten Ausführungsbeispielen näher beschrieben.

Es zeigen:
- Fig. 1: eine Seitenansicht einer Maschine zum Verlegen eines Fahrdrahtes oder eines Tragseiles einer Fahrleitung,
- Fig. 2: eine vergrößerte Detailansicht einer Friktionswinde, und
- Fig. 3 bis 5: jeweils schematische Darstellungen weiterer Ausführungsvarianten.

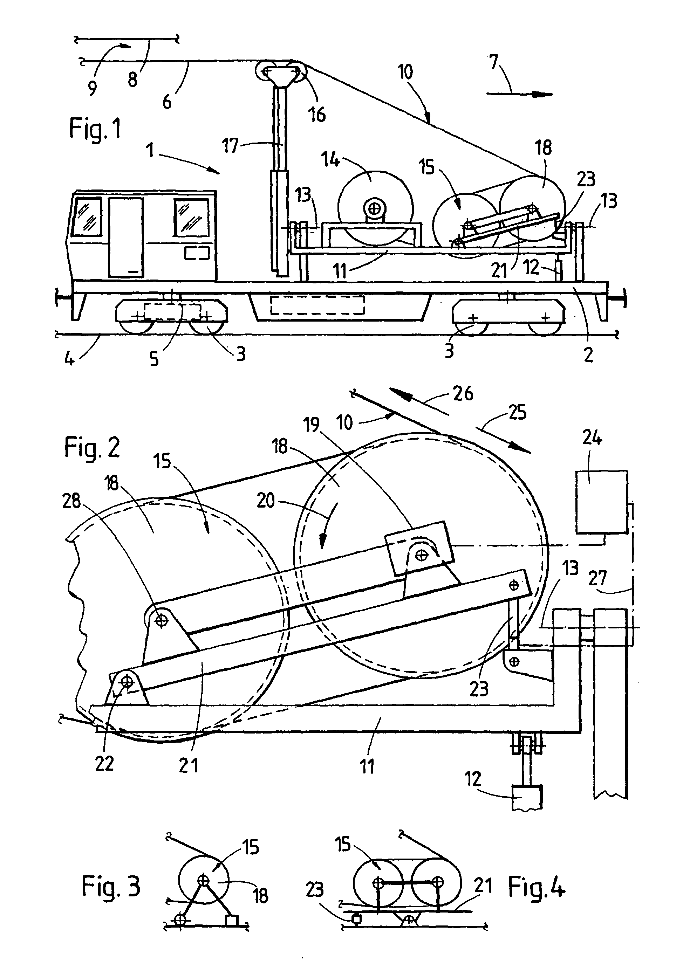

Eine in den Fig. 1 und 2 dargestellte Maschine 1 mit einem Maschinenrahmen 2 ist durch Schienenfahrwerke 3 auf einem Gleis 4 verfahrbar und mit einem Fahrantrieb 5 ausgestattet. Eine Arbeitsrichtung zum Verlegen eines Fahrdrahtes 6 ist durch einen Pfeil 7 angedeutet. Zusammen mit einem Tragseil 8 wird eine elektrische Fahrleitung 9 gebildet, wobei im folgenden der Einfachheit halber für Tragseil 8 und Fahrdraht 6 der Ausdruck Fahrleitungsseil 10 als übergeordneter Begriff verwendet wird.

Ein Hilfsrahmen 11 ist durch einen Antrieb 12 um in Maschinenlängsrichtung verlaufende Achsen 13 verschwenkbar am Maschinenrahmen 2 gelagert. Mit dem Hilfsrahmen 11 sind eine Speichertrommel 14, eine Friktionswinde 15 und ein höhenverstellbarer, Umlenkrollen 16 aufweisender Ausleger 17 verbunden.

Die Friktionswinde 15 besteht aus zwei Windenrollen 18, die durch einen hydraulischen Antrieb 19 in eine durch einen Pfeil 20 angedeutete Richtung drehbar sind. Die Friktionswinde 15 ist auf einem Windenrahmen 21 gelagert, der an einem Ende um eine parallel zu einer Achse 28 der Friktionswinde 15 verlaufende Schwenkachse 22 verschwenkbar mit dem Hilfsrahmen 11 verbunden ist. Am gegenüberliegenden Ende ist zwischen Winden- und Hilfsrahmen 11, 21 ein Kraftsensor 23 in Form eines Dehnmeßstreifens angeordnet. Dieser ist ebenso wie der Antrieb 19 mit einer Steuer- und Regeleinrichtung 24 verbunden.

Mit der Maschine 1 kann wahlweise der Fahrdraht 6 oder das Tragseil 8 in einer endgültigen Verlegespannung von der Speichertrommel 14 abgezogen und mit nicht näher dargestellten Hängern und Auslegern der Fahrleitung 9 verbunden werden. Im Beispiel gemäß Fig. 1 und 2 wird der Fahrdraht 6 unter kontinuierlicher Vorfahrt der Maschine 1 in der Arbeitsrichtung 7 verlegt.

Dazu wird am Verlegebeginn der Fahrdraht 6 zwei mal um die Windenrollen 18 gewickelt, um damit durch die Friktionswinde 15 einen Abzugswiderstand 25 zu erzeugen. Dieser ist einer Abzugskraft 26 entgegengerichtet, die dadurch entsteht, daß einerseits ein nicht dargestelltes Ende des Fahrdrahtes 6 mit einem Ausleger verbunden ist und andererseits die Maschine 1 in Arbeitsrichtung 7 bewegt wird.

Mit dem Kraftsensor 23 besteht nunmehr die Möglichkeit, die Abzugskraft bzw. Verlegespannung 26 kontinuierlich zu registrieren und mit Hilfe eines Regelkreises 27 konstant zu halten, in dem zur Vermeidung von Spannungsschwankungen der Abzugswiderstand 25 über den Antrieb 19 entsprechend verändert wird. Mit der speziellen Anordnung des Kraftsensors 23 erübrigt sich jedwede Manipulation für einen Wechsel der Speichertrommel 14. Außerdem ist keine besondere Einstellung in Abhängigkeit vom verwendeten Seilquerschnitt erforderlich.

Gemäß einer in Fig. 3 gezeigten Variante besteht die Friktionswinde 15 lediglich aus einer einzigen Windenrolle 18.

Gemäß Fig. 4 ist der Windenrahmen 21 wippenartig gelagert, wobei als Kraftsensor 23 ein Druckmesser vorgesehen ist.

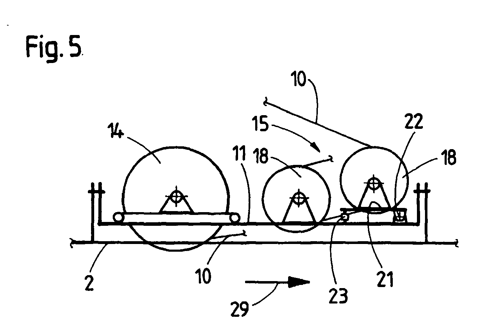

Schließlich ist in Fig. 5 eine weitere Ausführungsform dargestellt. Die darin ersichtliche Friktionswinde 15 weist mehrere voneinander unabhängige Windenrollen 18 auf. Die - bezüglich einer Abzugsrichtung 29 des Fahrleitungsseiles 10 von der Speichertrommel 14 - letzte Windenrolle 18 ist um die Schwenkachse 22 verschwenkbar am Windenrahmen 21 angeordnet. Der zwischen diesem und dem Hilfsrahmen 11 angeordnete Kraftsensor 23 ist als Druckmessbolzen ausgebildet.

## Patentansprüche

1. Maschine (1) zum Verlegen eines aus einem Fahrdraht (6) oder einem Tragseil (8) einer Fahrleitung (9) eines Gleises (4) gebildeten Fahrleitungsseiles (10), mit einem auf Schienenfahrwerken (3) verfahrbaren Maschinenrahmen (2), einer Speichertrommel (14), einer höhenverstellbaren Umlenkrolle (16) und einer zwischen dieser und der Speichertrommel (14) angeordneten Friktionswinde (15), mit der beim Abziehen des Fahrleitungsseiles (10) von der Speichertrommel (14) unter Erzeugung einer Verlegespannung ein - einer auf das Fahrleitungsseil (10) einwirkenden Abzugskraft (26) entgegenwirkender - Abzugswiderstand (25) gebildet wird, sowie mit einem Kraftsensor (23) zum Messen der Verlegespannung, **dadurch gekennzeichnet, daß** der Kraftsensor (23) zwischen einem die Friktionswinde (15) tragenden Windenrahmen (21) und einem mit diesem verbundenen Hilfsrahmen (11) angeordnet ist.

2. Maschine nach Anspruch 1, **dadurch gekennzeichnet, daß** die Friktionswinde (15) auf dem Windenrahmen (21) gelagert ist, der an einem bezüglich einer Maschinenlängsrichtung (7) dem Kraftsensor (23) gegenüberliegenden Ende um eine Schwenkachse (22) verschwenkbar mit dem Hilfsrahmen (11) verbunden ist.

3. Maschine nach Anspruch 2, **dadurch gekennzeichnet, daß** die Schwenkachse (22) parallel zu einer Achse (28) der Friktionswinde (15) verlaufend angeordnet ist.

4. Maschine nach einem der Ansprüche 1, 2 oder 3, **dadurch gekennzeichnet, daß** der Kraftsensor (23) als Regelgröße in einem Regelkreis (27) integriert ist, der - in Abhängigkeit einer Differenz zwischen Verlegespannung des Fahrleitungsseiles (10) und einer gewünschten Sollspannung - für eine Beeinflussung eines Antriebes (19) der Friktionswinde (15) für deren Drehzahländerung ausgebildet ist.

5. Maschine nach Anspruch 1, **dadurch gekennzeichnet, daß** die Friktionswinde (15) mehrere Windenrollen (18) aufweist, wobei ausschließlich die - bezüglich einer Abzugsrichtung (29) des Fahrleitungsseiles (10) von der Speichertrommel (14) - letzte Windenrolle (18) am Windenrahmen (21) angeordnet ist.

## Claims

1. A machine (1) for installing a catenary cable (10) formed by a contact wire (6) or a carrying cable (8) of a catenary (9) of a track (4), including a machine frame (2) mobile on on-track undercarriages (3), a storage drum (14), a vertically adjustable deflection roller (16) and, arranged between the latter and the storage drum (14), a friction winch (15) by means of which a pull-off resistance (25) - counteracting a pull-off force (26) acting upon the catenary cable (10) - is generated during the pulling of the catenary cable (10) from the storage drum (14) while producing an installation tension, and also including a force sensor (23) for measuring the installation tension, **characterized in that** the force sensor (23) is arranged between a winch frame (21), carrying the friction winch (15), and an auxiliary frame (11) connected thereto.

2. A machine according to claim 1, **characterized in that** the friction winch (15) is supported on the winch frame (21) which, at an end lying opposite the force sensor (23) with regard to a longitudinal direction (7) of the machine, is connected to the auxiliary frame (11) for pivoting about a pivot axis (22).

3. A machine according to claim 2, **characterized in that** the pivot axis (22) is arranged to extend parallel to an axis (28) of the friction winch (15).

4. A machine according to one of claims 1, 2 or 3, **characterized in that** the force sensor (23) is integrated as a controlled variable in a control circuit (27) which - in dependence upon a difference between the installation tension of the catenary cable (10) and a desired ideal tension - is designed for influencing a drive (19) of the friction winch (15) for changing the rotational speed thereof.

5. A machine according to claim 1, **characterized in that** the friction winch (15) comprises several winch rollers (18), wherein only the last winch roller (18) - with regard to a pull-off direction (29) of the catenary cable (10) from the storage drum (14) - is arranged on the winch frame (21).

## Revendications

1. Machine (1) pour la pose d'un câble de caténaire (10) formé d'un fil de contact (6) ou d'un câble porteur (8) d'une caténaire (9) d'une voie ferrée (4), comprenant un châssis de machine (2) déplaçable sur des mécanismes de roulement ferroviaires (3), un tambour de stockage (14), une poulie de renvoi réglable en hauteur (16) et un treuil à friction (15) disposé entre celle-ci et le tambour de stockage (14), avec lequel une résistance d'extraction (25) agissant à l'encontre d'une force d'extraction (26) agissant sur le câble de caténaire (10) est formée lors de l'extraction du câble de caténaire (10) du tambour de stockage (14) en générant une tension de pose, ainsi que comprenant un capteur de force (23) pour mesurer la tension de pose, **caractérisée en ce que** le capteur de force (23) est disposé entre un cadre de treuil (21) portant le treuil à friction (15) et un cadre auxiliaire (11) relié à celui-ci.

2. Machine selon la revendication 1, **caractérisée en ce que** le treuil à friction (15) est logé sur le cadre de treuil (21) qui est relié au cadre auxiliaire (11) à pivotement autour d'un axe de pivotement (22) à une extrémité opposée au capteur de force (23) par rapport à une direction longitudinale de la machine (7).

3. Machine selon la revendication 2, **caractérisée en ce que** l'axe de pivotement (22) est disposé en s'étendant parallèlement à un axe (28) du treuil à friction (15).

4. Machine selon l'une quelconque des revendications 1, 2 ou 3, **caractérisée en ce que** le capteur de force (23) est intégré en tant que grandeur réglée dans une boucle d'asservissement (27) qui, en fonction d'une différence entre tension de pose du câble de caténaire (10) et une tension de consigne souhaitée, est réalisée pour une influence d'un entraînement (19) du treuil à friction (15) pour la modification de sa vitesse de rotation.

5. Machine selon la revendication 1, **caractérisée en ce que** le treuil à friction (15) présente plusieurs poulies de treuil (18), dans laquelle seule la dernière poulie de treuil (18) par rapport à un sens d'extraction (29) du câble de caténaire (10) du tambour de stockage (14) est disposée sur le cadre de treuil (21).
